# EUROPEAN PATENT SPECIFICATION

(11) **EP 2 406 493 B1**
(45) Date of publication and mention of the grant of the patent: **09.01.2013**
(21) Application number: 10717557.2
(22) Date of filing: 08.02.2010
(51) Int. Cl.: F03D 3/00, F03D 3/04, F03D 3/06, F03D 11/04

(54) **WIND TURBINE WITH HORIZONTAL SHAFT PERPENDICULAR TO WIND DIRECTION**
WINDTURBINE MIT EINER HORIZONTALEN WELLE SENKRECHT ZUR WINDRICHTUNG
ÉOLIENNE POURVUE D'UN ARBRE HORIZONTAL PERPENDICULAIRE À LA DIRECTION DU VENT

(30) Priority: 13.03.2009 TR 200901965
(43) Date of publication of application: 18.01.2012
(73) Proprietor: Söz, Selim, 45410 Manisa (TR)
(72) Inventor: Söz, Selim, 45410 Manisa (TR)
(74) Representative: Cayli, Hülya
(86) International application number: PCT/EP2010/051480
(87) International publication number: WO 2010/102867

(56) References cited:
- WO-A2-2005/108779
- ES-A1- 2 300 224
- GB-A- 190 918 845
- US-A- 1 607 317
- US-A- 4 530 638
- US-A1- 2006 110 251

## Description

This invention is about a wind turbine to generate electricity from the kinetic energy of wind. The results and the structure of the invention are totally different from the today's common known technologies and designs.

In today's rotor type wind turbine technology, the horizontal rotation shaft is parallel to the wind direction. Wind coming to the rotor blades creates bi-directional vectors. The one that is parallel to the shaft is a negative vector and it applies a force on the rotor parallel direction with the wind. The other vector applies force to the blades in the direction of the rotation of the shaft and it is a positive vector. The strength of the negative vector makes the resultant direction away from the positive vector. There is always a difference between the direction of shaft rotation and resultant direction. As a result, the negative vectorial force decreases the effect of the positive vectorial force. The rotor type systems need wider and longer blades in order to create the required energy. This requirement increases the cost of the turbine.

Patent document WO2005108779A2 discloses a wind driven turbine. Said turbine has a plurality of sigmoid blades with the trailing edge of each blade mounted parallel to a horizontally oriented shaft. Each blade extends radially outward from the shaft. An electric generation system is composed of an array of the turbines mounted on a platform positioned on top of a tower. Each turbine shaft may be connected directly with a generator for producing electricity. However in this system, said sigmoid blades do not use the wind power efficiently.

Another patent document with number US1607317A discloses a wind power apparatus. Said apparatus consists of a gang of wind wheels, preferably of a type having substantially radial blades, which are resented edgewise to the wind; the blades of each wheel preferably being provided with a concave, effective front face, and each wheel comprising two parallel series of the blades. Similar to the system described in the patent document W02005108779A2 in this system, blades do not use the wind power efficiently.

In this invention the below mentioned results are tried to be achieved: First, to design a new turbine system that faces the wind from the front with a larger surface. Second, to support the rotation of the shaft by the resultant of the vectors generated by the winds hitting the surfaces and to help the rotation of the shaft with all the collected kinetic energy. Third, to decrease the negative effect on the turbine because of large surfaces that face the wind. Fourth, to eliminate the effect of the weight and volume of the generator on turbine design. Fifth, to eliminate the effect of the weight of mechanism that turns the turbine to the wind direction. Sixth, the use of rods while transferring the motion on the turbine shaft to the generator and to minimize the friction and power loss by applying bidirectional and equal rotation power to the driven gear in the group of gears used among the rods.

This design is about a wind turbine, where horizontal shaft is perpendicular to the wind direction.

Turbine operates at a certain height. That height is calculated according to the wind measurements done where the turbine is established. A concrete platform (1), generator room (2) is constructed first. These (1, 2) are carried by platform feet (3). The length of the feet (3) is related with the required height for the platform (1). The platform (1) has a circular shape where the vertical axis of the turbine (4) passes through the centre thereof. Platform pipe (5) that passes through the centre of the platform (1) is strengthened by fixing to the steel parts of the platform (1). Turbine carrier (6) sits on 8 feet (7) with bearings at the platform (1). The support feet with bearings (7) sit on a platform (1) centred metal ring (8). The platform pipe (5) connects the turbine carrier (6) and the platform (1). The turbine carrier (6) rests on this pipe (5) by means of a radial pipe bearing (9). The hole diameter of the pipe bearing (9) are 0,5 mm greater than the platform pipe (5) diameter. Turbine carrier (6) has no pressure on the pipe (5). During the horizontal movements at strong winds, turbine carrier (6) is supported by the platform pipe (5). When turbine carrier (6) is turned to the wind direction, it rotates around the platform pipe (5) with support feet with bearings (7) on the metal ring (8) that functions as a rail system.

The turbine on the platform (1) is rotated to the wind direction with a turbine electric motor (10) with reducer. The assembly point of the motor (10) is prepared during the construction process of the platform (1). A cylindrical space is left blank on the platform that is designed according to the diameter of the motor (10).

And a thick steel platform plate (11) is attached at the top thereof. The platform plate (11) is fixed to the metal parts of the platform (1). There exists a hole in the centre of the plate (11) through which the turbine system electric motor gear (12) passes, and the motor (10) is attached to the said plate (11).

Electric motor bearing (13) on top of the motor gear (12) houses the motor (10) shaft. The bearing (13) is connected to the plate (11) by a electric motor bearing support (14). Motor gear (12) is related with the gears of turbine rotating gear (15). The rotating gear (15) is attached to the turbine pipe (5) with a rotating gear bearing (16) at the centre. Rotating gear (15) has 2 symmetrical contact bearings (17). At the two sides of motor gear (12) and at the bottom of the rotating gear (15), there exist two load bearings (18). Bearings (18) are attached to the plate (11) with a load bearing support (19) in between. Bearings (18) are 3 sets in total and sit at the corners of equilateral triangle they form. At the bottom of the turbine carrier (6), there are two rotating rods (20). The bottom ends of these rods (20) sit in the contact bearings (17). The rod (20) diameter is 1 mm less than the hole diameter of contact bearing (17). The application points of the force that turns the turbine are the hole surfaces of two contact bearings (17).

The motor (10) turns the turbine carrier (6) to the wind direction when it starts operating.

Turbine rotating mechanism (10, 12, 13, 15) is carried by the platform (1) and they have no pressure on the turbine carrier (6).

The speed and direction sensors operate turbine motor (10) automatically. For the motor (10) start up, the wind speed should be found to be enough by the speed sensor and the direction sensor needs to detect a misalignment between the wind direction and the turbine direction. There is also provided a system to be used during maintenance and repair, which prevents the control by sensors and turns the turbine to any desired point by operating the motor (10).

Turbine carrier (6) with turbine shaft bearings (21) at each side carries turbine shaft (22). At a turbine directed to the wind direction, turbine shaft (22) is always perpendicular to the wind direction. The shaft (22) carries 3 separate gears (24), connected with the gear hubs (23) thereto. Gears (24) are connected to each other by 24 connection profiles (25) between them. Gears (24) are formed by profiles of different dimensions. There exist gear blades (26) at the end of each gear (24) profile. On a base profile (27) there are 13 gear blades (26). On a gear (24) there are 312 gear blades (26) in total. The maximum length between the gear blade (26) ends is turbine diameter. In this design, the turbine diameter is 40 meters. The gear blade (26) ends are on a circular ring, formed by turbine radius, whose centre is the gear hub (23) shaft (22) centre. The lengths of the gear blades (26) on the base profile (27) are short at the sides with an increasing height to the centre thereof. The bottom ends of the gear blades (26) are in the direction of shaft centre. To increase the attachment strength of the gear blades (26) on the base profile (27), there are provided gear blade supports (28) at the front and backside of the attachment points. Gear (24) is supported by inner supports (29, 30) for gear and carrier arms (31). In gear (24) design 10X10X1 mm (25, 26, 28, 29), 10X20X1 mm (27, 30) and 20X30X1 mm (31) stainless steel profiles are used.

Between the gear blades (26) of the 3 gear (24) there exist 312 wind plates (32). Wind plates (32) collect the kinetic energy of the wind. The plates (32) are carried by plate carriers (33). The plate carrier (33), is formed by 10X1 mm stainless steel strips. The plate (32) that covers and welded to the plate carrier (33) is than attached in between the gear blades (26). 0,3 mm stainless steel strips are used in wind plates (32).

Turbine shaft (22) horizontal axis separates the plates (32) into two planes as bottom and top planes. The plates (32) over the horizontal axis of the turbine shaft (22) turned to the wind direction take the wind. The maximum height of the gear blades (26) is measured when they are at the top of the turbine. Wind plates (32) carry two inclined planes. In order to explain the first one lets consider the upper view of a plate (32) at the top of the turbine forms a line between the gear blades (26) of the three gears (24). Angles (34) between the plates (32) taking the wind and horizontal axis of the shaft (22) define the inclined plane of the plates (32). The inclined plane angle (34) of a plate prepared to take the wind is zero degrees. The angles (34) of the plates (32) continue to increase towards the top of the turbine. The angle (34) at the top of the turbine is 90 degrees. The wind that hit the plates forming the inclined plane needs to flow away from the plates (32) rapidly after the impact point. For that reason the height of the plates (32) is kept short, and a large space is left between the plates (32) and the shaft (22).

When the resultant of the bidirectional vectors is inspected at the point of wind contacts the plates (32), it can be calculated that they are perpendicular to the plate (32) surfaces and support the rotation of the shaft (22).

The maximum length of a plate (32) is the distance of a gear (24) between the two adjacent gear blade (26) ends. At the below table, gear blade (26) end distances and maximum plate (32) lengths are given as a result of increasing the number of wheel blades (26):

| | | | |
|---|---|---|---|
| Base Profile (27) length (m) | 5,23 | 5,23 | 5,23 |
| The number of gear blades (26) on a base profile (27) | 13 | 17 | 26 |
| The total number of gear blades (26) at a gear (24) | 312 | 408 | 624 |
| The distance between the two adjacent gear blade (26) ends (m) | 0,40 | 0,30 | 0,20 |
| Maximum plate lengths (m) | 0,40 | 0,30 | 0,20 |

If the weight of plate (32) and plate carriers (33) can be decreased with light weighted-reinforced materials, the number of gear blades (26) and plates (32) can be increased, and thus maximum plate (32) lengths can be decreased.

It needs to be mentioned that the top view of a plate (32) is different following the definition of the first inclined plane (34) of the plates (32). This difference is ignored in order to explain the first inclined plane. Now we will look at the top view of a plate (32) at the top of the turbine; At the plates (32) that meet the wind, the middle of the plates (32) are kept at the front and the sides are kept behind so that a second inclined plane (36) is formed. The wind that hits the inclined planes (36) of 22 degrees flows through the two sides of the plates (32). As the negative vectors (37) formed by the wind hitting the plates (32) are equal forces and at the opposite direction, the resultant is zero at the gear blades (26) of the middle gear (24). The positive vectors (38) parallel to the wind forms a new resultant (38) that supports the rotation of the shaft (22).

At the given example the inclined plane (36) angles of plates (32) are 22 degrees. The inclined plane angles (36) can be recalculated according to the wind measurements made at the site.

Wind plates (32) have two different inclined planes (34,36) and functionalities:
Below table shows the weights on the shaft (22).

**Profile weights of a gear (24)**

| TYPE | LENGHT (m) | WEIGHT (kg) |
|---|---|---|
| 10x10x1 mm | 281,2 | 78,736 |
| 10x20x1 mm | 276,64 | 124,488 |
| 20x30x1 mm | 156,48 | 118.925 |
| | | 322,150 |
| Weight of three gear (24) profiles (kg)..... | | 966,450 |
| Weight of 134,4 m length connection profiles between the gears | | 37,632 |
| Total Weight of gear system (kg)..... | | 1,004,082 kg |
| Plate (32) weight calculation (Maximum plate length is taken) | | |

| TYPE | | WEIGHT (kg) |
|---|---|---|
| 0,3 mm plate (32) 748,8 m2 | | 1.651,104 |
| 10x1 mm carrier (33) 4243,2 m | | 330.970 |
| Total plate weight (32,33) | | 1.982,074 kg |
| Grand total of the weight on the shaft (22) kg | | 2.986,156 kg |

There exists a windbreaker to prevent the wind force on the plates (32) below the horizontal plane of the shaft at the turbine turned to the wind direction. The plates (32) above the plane meet the wind and rotate the shaft (22).

For a windbreaker there are two possible options. At the first option only a concrete wall (39) is used. That wall (39) is constructed on its own stands (40). The heights of the stands (40) reach the height of the platform (1) and the stands (40) carry the cylindrical concrete wall (39) thereon. The centre of the cylindrical wall (39) is on the vertical axis (4) of the turbine. The wall radius is 2 cm greater than the turbine radius. That difference is kept to prevent gear blades (26) touch the wall (39). The height of the wall (39) is equal to the turbine radius. In that case the height of the turbine shaft (22) reaches the horizontal plane height.

As a second option for windbreakers, a combination of concrete wall and metal windbreaker (41) is taken into consideration. In that design the height of the cylindrical wall (39) is decreased and metal windbreakers (42) are assembled. The wall (39) radius can be calculated as 3/4 of turbine radius. If the wall (39) radius is increased, the wall (39) height will also increase.

Metal windbreaker (42) is formed by covering the wind directional side of the carrying profile frame by plates (32).

At each side of the metal windbreaker (42) there exist connection arms (43). The connection between arms (43) and the turbine carrier (6) is provided by arm bearings (44). Metal breaker (42) and arms (43) have the ability to rotate on the vertical axis with the help of these bearings (44). The centre of gravity of the metal windbreaker (42) and arms (43) will change depending on the metal windbreaker (42) height. In that case the windbreaker (42) and arms (43) will either have no weight on the turbine carrier (6) or have an impact of decreasing the weight of the carrier (6).

Metal windbreaker (42) with two bearings and gear wheels (45) stands on metal rail (46) embedded in the wall (39). Taking care of the snow and ice during winter, top of the wall (39) is given a curved shape and the metal rail (46) is protected with enclosing them in the wall (39). Rail gear (47) is placed on the basement of the metal rail (46). Gears of wheels with ball bearings (45) are compatible with the rail gears (47) they stand on. The electric motor (49) gear (50) of the metal windbreaker (42) has also a connection with the rail gear (47). The connection of the wheels (45) and motor (49) with the metal windbreaker (42) is provided by the frame profiles (48) of the windbreaker (42).

Motor (49) and turbine motor (10) take the equivalent ways to coordinate the harmonized rotation of the metal windbreaker (42) and the turbine.

The sensors that control the turbine motor (10) and windbreaker motor (49) are mounted on the metal windbreaker (42).

If the design has only concrete wall (39), in order to mount on the turbine motor (10) control sensors, arms with bearings (51) are used. Wheels (52) of the arms (51) stand on the metal rails embedded in the wall (39). The connection between the turbine carrier (6) and other ends of these arms (51) is also provided by bearings (53). Arm guides (54) that move the arms with bearings (51) when the turbine carrier rotates are connected to the turbine carrier (6).

Arm guides (54) allow the vertical cylindrical rotation of the arms (51) while turning the arms (51) on arm guides' (54) horizontal movements. In order to prevent the turbulence effect of the reflected wind from the wall (39) before the plates (32), arm lengths are extended beyond the wall (39) and thick metal breaker plates (55) are embedded in between. The other function of the breaker plate (55) is to slide the centre of gravity of the arms on the wall (39) and prevent negative weight on the turbine carrier (6).

The power of the rotating shaft (22) is transferred to the vertical rods (58) with the upper left (56) and the upper right (57) gear train. Then the power is transferred to the horizontal rods (61) by lower left (59) and lower right (60) gear train. The horizontal rod (61) rotation is transferred to the generator shaft (63) by lower middle gear train (62). Generator shaft (63) position is not effected
by the rotation of the turbine carrier (6) rotation. Generator shaft (63) passes through the platform pipe (5) and turbine vertical axis (4), and then reaches a turbine generator (64) at the generator room (2). In that way generator (64) can be fixed at the generator room (2), and no need to turn on any axis. Generator (64) has no weight on the turbine carrier (6).

At the right end of the turbine shaft (22) there exist turbine shaft bearing (21), upper right gear train (57) and maintenance brake (65). At the bottom of the upper right gear train (57) there exists vertical rod upper radial bearing (66). Brake (65), gear train (57) and bearing (66) are connected to the turbine carrier (6). In order to get available design for the maintenance of these components (21, 57, 65, 66) there exists a jack mechanism (67) at the bottom of the shafts (22).

When the turbine shaft (22) starts to move the gear train (57) starts to operate driving gear (68) and the driven gear (69). In order to minimize the friction between these gears (68, 69) bidirectional forces are applied to the driven gear (69). For that purpose 2 additional gears are added to the system. These are transfer gear (70) and support gear (71). The driving gear (68) is attached to the shaft (22) and is fixed. When the driving gear (68) starts rotation, the driven gear (69) and transfer gear (70) also start to rotate. Transfer gear (70) rotates the support gear (71). The support gear (71) applies a force to the driven gear (69). The direction of the support gear (71) rotation is opposite to the turbine shaft (22) rotation direction. Transfer gear (70) is connected to the axial bearing (72). Support gear (71) is connected to its own axial bearing (73).

The axial bearings (72, 73) are connected to the gear train box (74). The box (74) is attached to the turbine carrier (6). The box (74) also supports the lubrication of gear train (68, 69, 70, 71) inside. The centre of the support gear (71) is blank. That support gear (71), axial bearing (73) and housing (74) has no contact point with the shaft (22). The combination of support gear (71) and axial bearing is provided by holding pipe (75).

During rotation we think that no interference occurs. At the pitch points of gears there exist opposite direction forces. One vector of the force applied to the transfer gear (70) by the rotation of the driving gear (68) is parallel to the shaft (22) and transmits the force to the support gear (71). The other vector is perpendicular to the previous tangential force and applies a pressure on transfer gear axial bearing (72). The rotation of the transfer gear (70) creates a similar effect on support gear (71). The support gear (71) creates the similar effect on driven gear (69). Driving gear (68) and support gear (71) applies pressure on the driven gear (69). Theoretically the pressure of the driving gear (68) on the shaft (22) is bigger. Because due to clearances between the gear teeth, the power decreases during the transfer process from driving gear (68) to the support gear (71). For that reason the support gear (71) applies a smaller force on the driven gear (69). The equal force applied on each side of the driven gear (69) equalizes the rotational forces.

Due to tooth clearances the support gear (71) takes its required position with a delay. In order to decrease that clearance, there is a need to let the driven gear (69) move on the horizontal axis with the shaft (22) and prevent the movement on the vertical plane. That motional property is achieved by keeping the tooth heights of the driven gear (69) shorter than the other gears (68, 70, 71). In that way the driven gear (69) and support gear (71) get closer. Due to pressure differences between the driving gear (68) and support gear (71); the driven gear (69) moves towards the support gear (71). In order to equalize the forces applied by driving gear (68) and support gear (71); the driven gear (69) needs to move and take its stable position. In that final position the clearances are ideal; the pressure and the rotational forces are the same on each side of the driven gear (69). The total friction within the gear box is kept at minimum by that design.

That sliding motion of the driven gear (69) decreases the support gear (71) clearances. A gear tooth can be defined as an isosceles trapezoid. The contact point of the two gear teeth is on side of the isosceles trapezoid. When the driven gear (69) moves apart from the driving gear (68), there occurs a clearance in between (68, 69). The rotation of the driving gear (68) is needed to close the clearance in between. In that way the contact point of the two mating gears moves from the base of the driving gear (68) to the tip. When the driving gear (68) starts rotation and closes the clearance, that motion also affects the system (68, 70,71) and helps in closing all the clearances. When the driven gear (69) closes the gap with the support gear (71), the contact point moves from the gear tip to the ideal pitch point and optimize the clearances in between the all the gears (68,70,71). The sliding motion has a positive effect on both ways in optimizing the clearances.

The design should prevent the motion of the driven gear (69) on the vertical plane of the shaft but let the motion of the vertical rods (58) parallel to the shaft (22). For that reason the housing (76) of the vertical rod upper radial bearing (66) has a special design. The housing (76) lets motion parallel to shaft (22) but prevents the motion on the vertical plane.

The bottom ends of vertical rods sit on axial bearings (77). The axial bearings (77) carry the weight of gear (69), rod (58) and the pressure from the adjacent gears (68, 71). At the top of the lower right gear train (60), there exists vertical rod lower end radial bearing (78). Both bearings (77, 78) are connected to turbine carrier (6).

If the number of gear teeth are decreased at the driven gears (69) and transfer gears (70) of upper gear trains (56, 57) the velocity of the vertical rods (58) will increase.

The difference between the upper right gear train (57) and lower right gear train (60) is because of the different thickness of shaft (22) and vertical rod (58) thicknesses. Upper gear trains (56, 57) and lower gear trains (59,60) are symmetrical in between.

The horizontal rod (61) rotates the opposite direction with the turbine shaft (22). If the fixed gear of lower middle gear train (62) is in the same direction with the fixed gear (68) of upper right gear train (57), the rotational direction of the generator rod (63) is from right to left. If it is positioned the opposite direction with the gear (68), then the rotation is from left to right.

This invention will be helpful in all the means of electricity supply.

Turbine design is explained in the below mentioned figures:

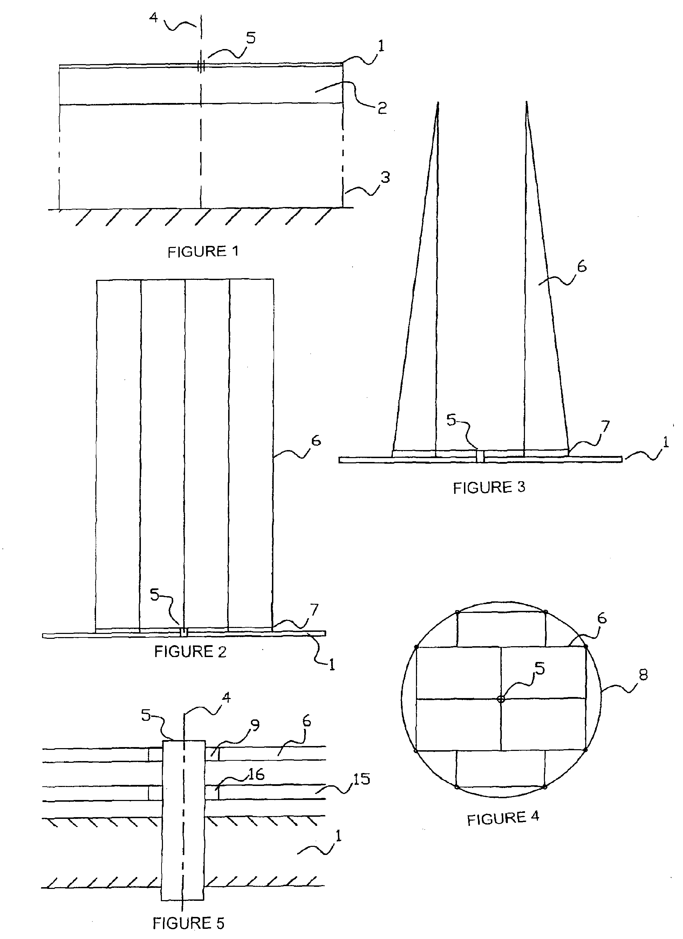

Figure 1 - Front view of concrete platform
Figure 2 - Side view of turbine carrier
Figure 3 - Front view of turbine carrier
Figure 4 - Top cross sectional view of turbine carrier bottom profiles
Figure 5 - Vertical cross sectional view of platform and turbine carrier connection

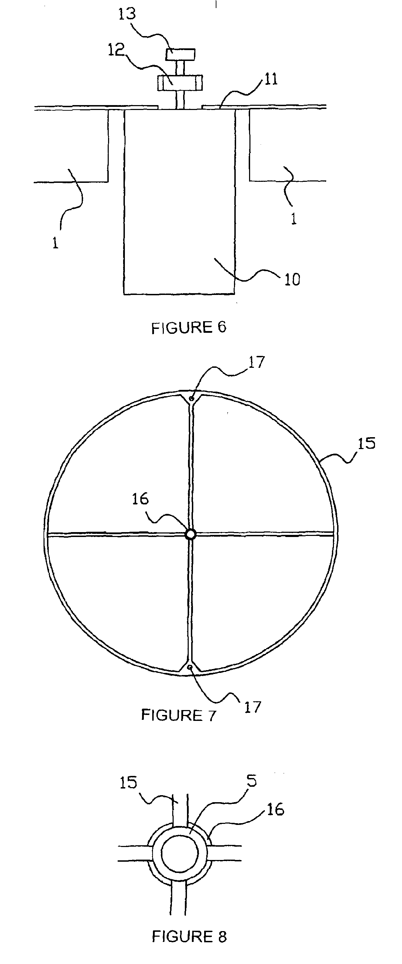

Figure 6 - Vertical cross sectional view of turbine electric motor inside the platform
Figure 7 - Top view of turbine rotating gear
Figure 8 - Top view of turbine rotating gear and turbine pipe connection

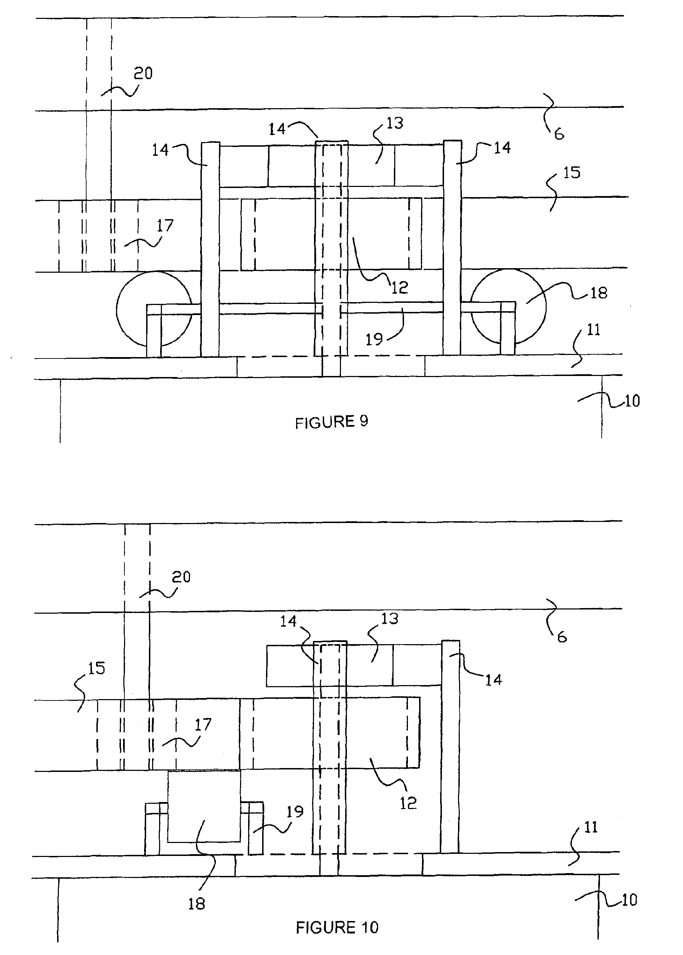

Figure 9 - Frontal view of turbine rotating gear and electric motor connection
Figure 10 - Side view of Figure 9

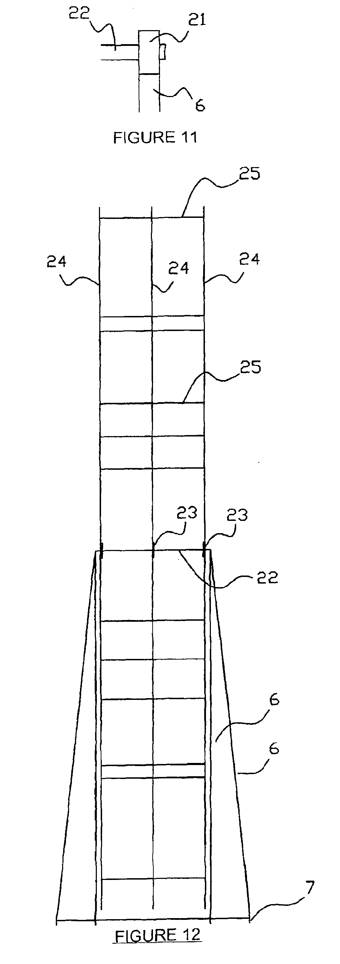

Figure 11 - Front view of turbine shaft bearing
Figure 12 - Front view of gears

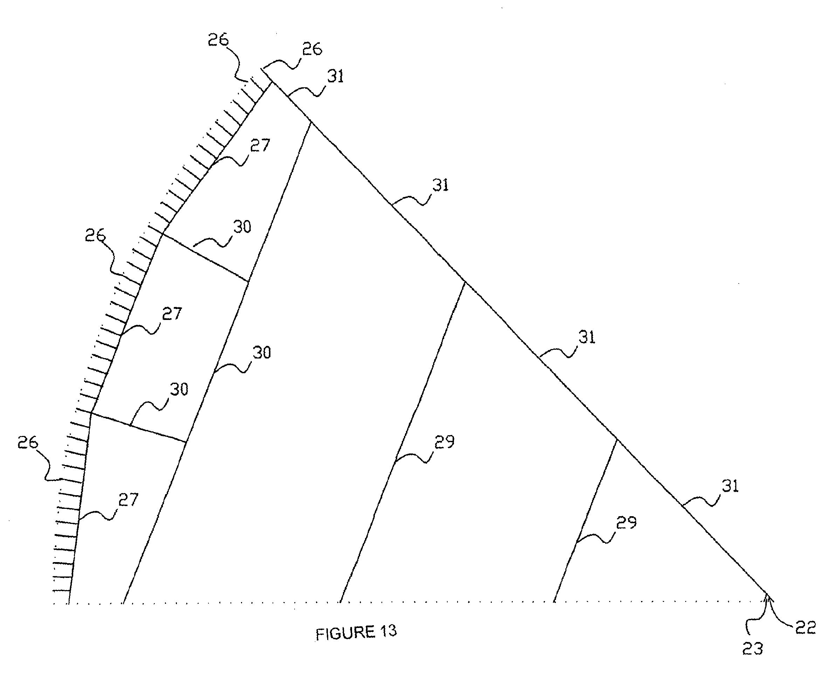

Figure 13 - Side view of 1/8 segment of a gear

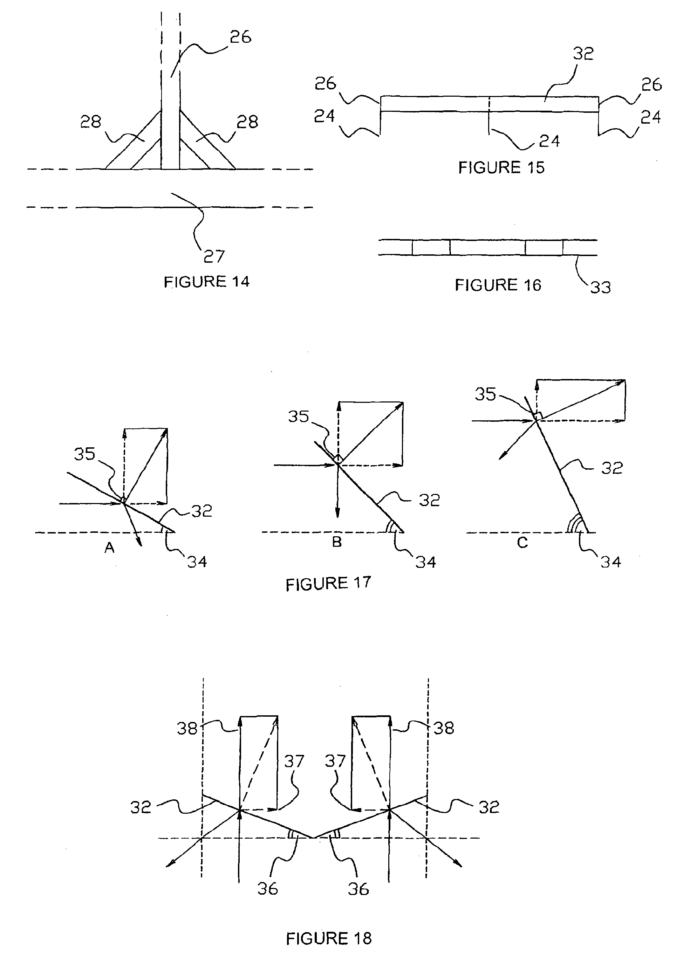

Figure 14 - Side view of gear blade supports
Figure 15- Front view of a wind plate at the top of the turbine
Figure 16 - Front view of a wind plate carrier
Figure 17 - Side view of inclined plane resultants at the wind plates
Figure 18 - Top view of inclined plane resultants at the wind plates

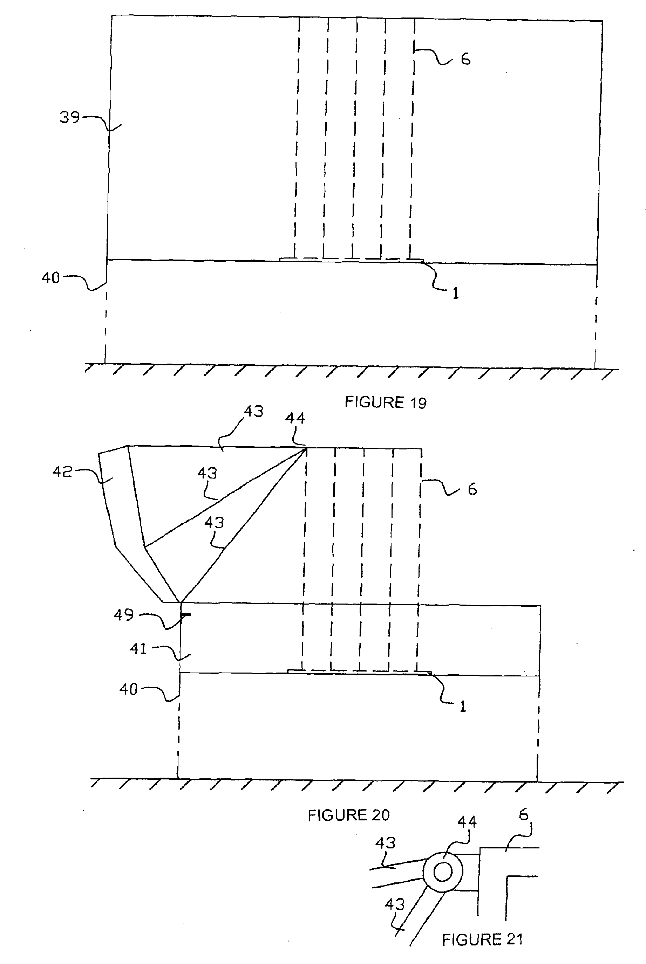

Figure 19 - Side view of concrete wall windbreaker
Figure 20- Side view of metal / concrete combination windbreaker
Figure 21 - Side view of arms with bearings and turbine carrier connection

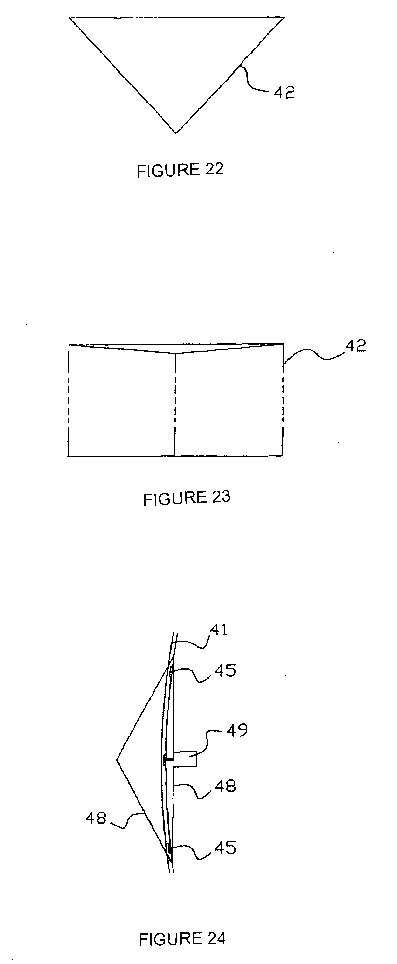

Figure 22 - Top view of metal windbreaker ceiling profile
Figure 23 - Front view of metal windbreaker
Figure 24 - Top view of the cross section of metal windbreaker base profiles and motor

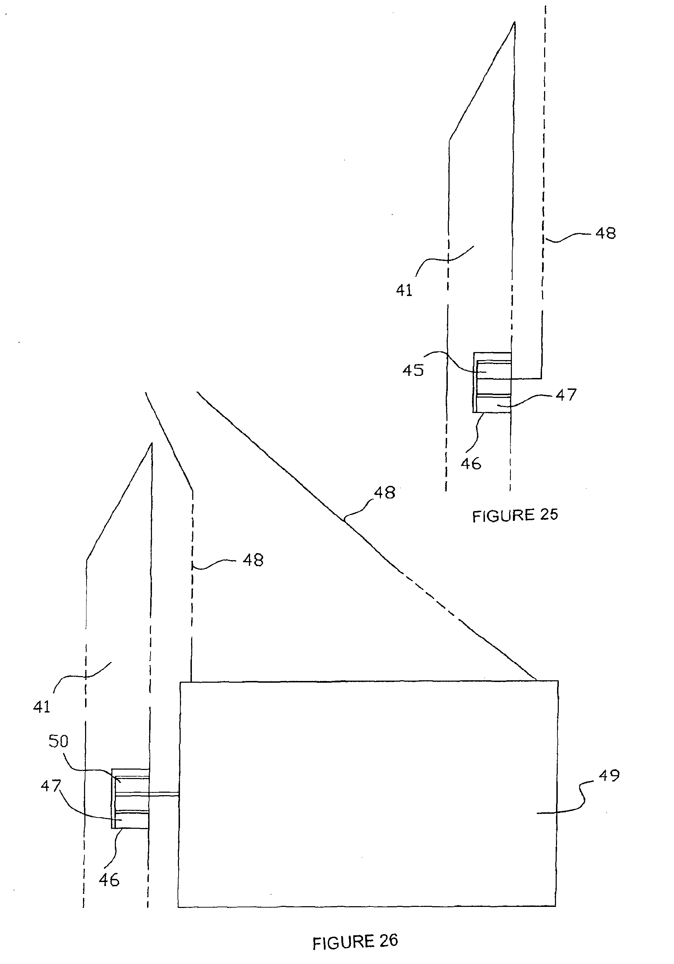

Figure 25 - Side cross sectional view of metal windbreaker bearing wheel
Figure 26 - Side cross sectional view of metal windbreaker motor and wall.

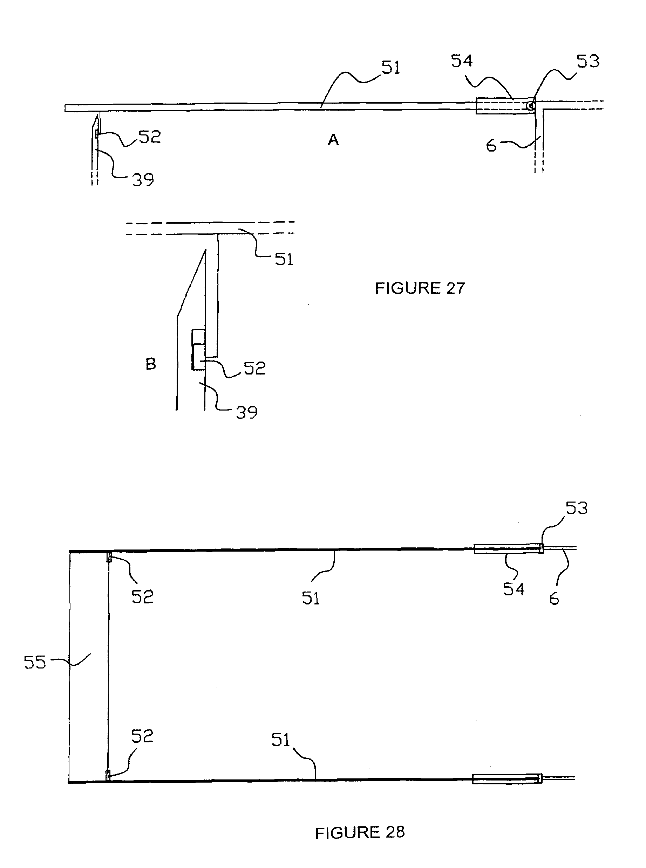

Figure 27 - Side view of arms with bearings
Figure 28 - Top view of arms with bearings

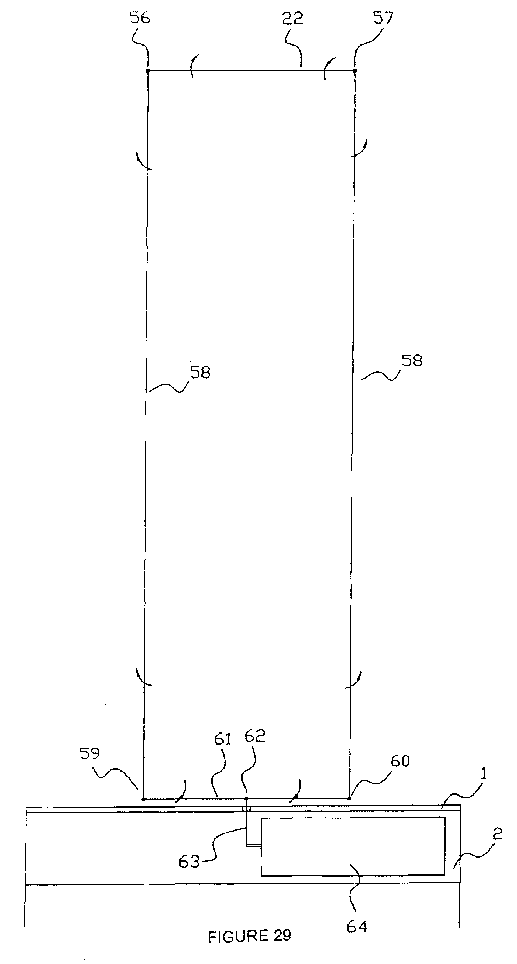

Figure 29 - Front view of power transfer to generator

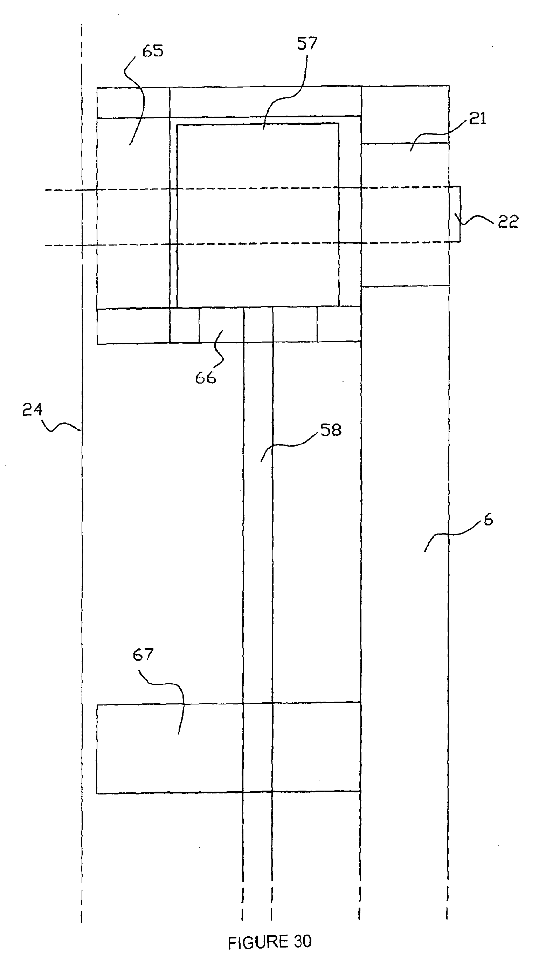

Figure 30 - Front view of turbine shaft right end circumference

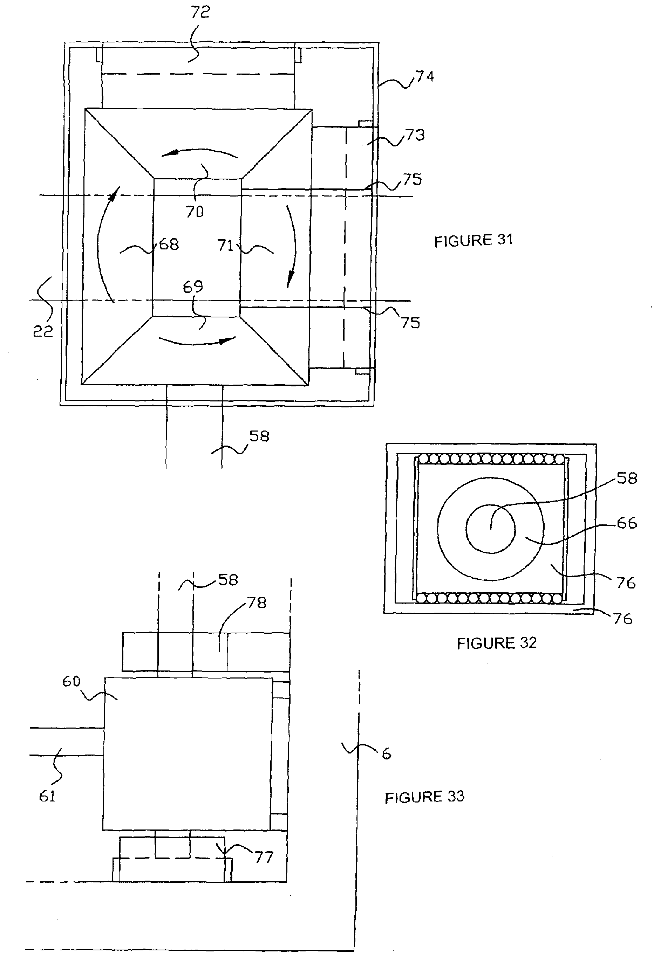

Figure 31 - Front view of upper right gear train
Figure 32 - Top view of vertical rod upper radial bearing housing
Figure 33 - Front view of lower right gear train and vertical rod bearings

Turbine components at the figures are given numbers as below:
1) Platform
2) Generator room
3) Platform feet
4) Vertical axis of the turbine
5) Platform /turbine pipe
6) Turbine carrier
7) Support feet with bearings
8) Metal ring
9) Pipe bearing of turbine carrier
10) Turbine electric motor
11) Platform plate
12) Turbine system electric motor gear
13) Electric motor bearing
14) Electric motor bearing support
15) Turbine rotating gear
16) Rotating gear bearing
17) Rotating gear contact bearings
18) Rotating gear load bearings
19) Rotating gear load bearing supports
20) Turbine carrier rotating rod
21) Turbine shaft bearings
22) Turbine shaft
23) Gear hub
24) Gear
25) Connection profiles between the gears
26) Gear blade
27) Gear blade base profile
28) Gear blade supports
29) Inner supports for gear
30) Inner supports for gear
31) Gear carrier arms
32) Wind plate
33) Wind plate carrier
34) Inclined plane (angles) of wind plates
35) Perpendicular angles at the resultants of wind plates
36) Second inclined plane (angles) of wind plates
37) Opposite direction negative vectors on secondary inclined planes of wind sheets
38) Resultant positive vectors on secondary wind plate inclined planes
39) Concrete wall wind breaker
40) Wind breaker wall stands
41) Concrete wall / metal combination windbreaker
42) Metal windbreaker
43) Metal windbreaker connection arms
44) Metal windbreaker connection arm bearing
45) Metal windbreaker wheels with bearings and gears
46) Metal rail
47) Metal rail gear
48) Metal windbreaker frame profiles
49) Metal windbreaker electric motor
50) Metal windbreaker electric motor gear
51) Arms with bearings
52) Wheels of arms
53) Connection bearings
54) Arm guides
55) Breaker sheet
56) Upper left gear train
57) Upper right gear train
58) Vertical rods
59) Lower left gear train
60) Lower right gear train
61) Horizontal rod
62) Lower middle gear train
63) Generator rod
64) Turbine generator
65) Maintenance brake
66) Vertical rod upper radial bearing
67) Jack mechanism
68) Driving gear
69) Driven gear
70) Transfer gear
71) Support gear
72) Transfer gear axial bearing
73) Support gear axial bearing
74) Gear train box
75) Holding pipe of support gear
76) Vertical rod upper radial bearing housing
77) Vertical rod axial bearing
78) Vertical rod lower radial bearing

## Claims

1. A wind turbine with horizontal turbine shaft (22) perpendicular to wind direction; for the maximum power generation to the turbine shaft (22), the wind turbine comprising:
a turbine shaft (22) perpendicular to the wind direction; gear wheels (24) carried by the turbine shaft (22); gear blades (26) located around the circumference of the gear wheels (24); wind plates (32) and a windbreaker (39, 41, 42) to prevent the wind forces from acting on the wind plates (32) below the horizontal plane of the turbine shaft (22); and whereby the wind plates (32) have a shape with two inclined plane (36) so that when meeting the wind, the middle of the wind plates (32) are at the front and the sides of the wind plates are behind, said wind plates (32) being inserted between gear blades (26).

2. A wind turbine according to claim 1 **characterized in that**; there is left a big space between the wind plates (32) and the shaft (22).

3. A wind turbine according to claim 1 **characterized in that**; there exists cylindrical windbreaker wall (39) or metal windbreaker actuated by the electric motor (49) between wind and the plates (32) to prevent the wind force on the plates below the horizontal plane of the shaft (22) while the turbine electric motor (10) turns the turbine carrier (6) as well as the gears (24) and the wind plates (32) thereon to the wind direction.

4. A wind turbine according to claim 1 **characterized in that**; there are provided vertical rods (58); a horizontal rod (61) moving in accordance with the shaft (22) on its horizontal plane; and a generator rod (63) which stands between said horizontal rod (61) and the generator (64) through the vertical axis of the turbine to transmit the power obtained by the rotation of the main shaft (22), which is bidirectionally movable on its horizontal plane, is transmitted to a generator (64) by the axial transfer shaft.

5. A wind turbine according to claim 4 **characterized in that**; the generator (64) is fixed at a generator room (2).

6. A wind turbine according to claim 4 **characterized in that**; there are provided gears (70, 71), axial bearings (72, 73), gear train box (74), holding pipe of support gear (75), radial bearing (66) and radial bearing housing (76) to minimize friction and loss of power between the gears (68, 69) by applying a bidirectional and equal rotation power to the driven gears (69) of the group of gears (56, 57, 59, 60, 62) which transmits power between the rods (22, 58, 61, 63) making a 90° angle to one another.

## Patentansprüche

1. Windturbine mit horizontaler Turbinenachse (22) senkrecht zur Windrichtung, zur maximalen Kraftübertragung auf die Turbinenachse (22), wobei die Windturbine umfasst:
eine Turbinenachse (22) senkrecht zur Windrichtung, Zahnräder (24) getragen durch die Turbinenachse (22), Zahnradflügel (26) angeordnet um den Umfang der Zahnräder (24), Windplatten (32) und einen Windbrecher (39, 41, 42), um zu verhindern, dass Windkräfte unterhalb der horizontalen Ebene der Turbinenachse (22) auf die Windplatten (32) wirken, wobei die Windplatten (32) eine Gestalt mit zwei geneigten Ebenen (36) aufweisen, so dass bei einem Auftreffen von Wind die Mitte der Windplatten (32) vorne und die Seiten der Windplatten hinten sind, wobei die Windplatten (32) zwischen den Zahnradflügeln (26) eingesetzt sind.

2. Windturbine nach Anspruch 1, **dadurch gekennzeichnet, dass** zwischen den Windplatten (32) und der Achse (22) ein großer Zwischenraum gelassen ist.

3. Windturbine nach Anspruch 1, **dadurch gekennzeichnet, dass** eine zylinderförmige Windbrecherwand (39) oder ein mittels des Elektromotors (49) betätigter metallener Windbrecher zwischen dem Wind und den Platten (32) existiert, um Windkräfte auf die Platten unterhalb der horizontalen Ebene der Achse (22) zu verhindern, während der Turbinenelektromotor (10) den Turbinenträger (6) sowie die Zahnräder (24) und die Windplatten (32) darauf in die Windrichtung dreht.

4. Windturbine nach Anspruch 1, **dadurch gekennzeichnet, dass** vertikale Stäbe (58), ein horizontaler Stab (61) sind in Übereinstimmung mit der Achse (22) in deren horizontaler Ebene (61) bewegend und ein Generatorstab (63) vorgesehen sind, der zwischen dem horizontalen Stab (61) und den Generator (64) durch die vertikale Achse der Turbine ragend steht, um die durch die Rotation der Hauptachse (22), die bidirektional in ihrer horizontalen Ebene bewegbar ist, enthaltene Energie auf einen Generator (64) durch die axiale Übertragungsachse zu übertragen.

5. Windturbine nach Anspruch 4, **dadurch gekennzeichnet, dass** der Generator (64) in einem Generatorraum (2) befestigt ist.

6. Windturbine nach Anspruch 4, **dadurch gekennzeichnet, dass** Zahnräder (70, 71), Axiallager (72, 73), ein Getriebezugkasten (74), ein Halterohr eines Stützzahnrades (75), Radiallager (66) und Radiallagergehäuse (76) vorgesehen sind, um Reibung und Energieverlust zwischen den Zahnrädern (68, 69) zu minimieren, indem eine bidirektionale und gleiche Rotationsenergie den angetriebenen Zahnrädern (69) der Gruppe von Zahnrädern (56, 57, 59, 60, 62) zugeführt wird, die Energie zwischen den Stäben (22, 58, 61, 63) übermittelt, die zueinander einen 90° Winkel besitzen.

## Revendications

1. Eolienne pourvue d'un arbre horizontal d'éolienne (22) perpendiculaire à la direction du vent ; pour la génération maximum de puissance à l'arbre d'éolienne (22), l'éolienne comprenant : un arbre d'éolienne (22) perpendiculaire à la direction du vent ; des roues d'engrenage (24) portées par l'arbre d'éolienne (22) ; des lames d'engrenage (26) situées autour de la circonférence des roues d'engrenage (24) ; des plaques à vent (32) et un brise-vent (39, 41, 42) pour empêcher que les forces du vent n'agissent sur les plaques à vent (32) sous le plan horizontal de l'arbre d'éolienne (22) ; et moyennant quoi les plaques à vent (32) présentent une forme avec deux plans inclinés (36) de sorte que lorsqu'elles rencontrent le vent, le milieu des plaques à vent soit sur l'avant et les côtés des plaques à vent soient derrière, lesdites plaques à vent (32) étant insérées entre les lames d'engrenage (26).

2. Eolienne selon la revendication 1, **caractérisée en ce qu'**il reste un grand espace entre les plaques à vent (32) et l'arbre (22).

3. Eolienne selon la revendication 1, **caractérisée en ce qu'**il existe une paroi de brise-vent cylindrique (39) ou un brise-vent métallique actionné par le moteur électrique (49) entre le vent et les plaques à vent (32) pour empêcher que la force du vent n'agisse sur les plaques à vent sous le plan horizontal de l'arbre (22) alors que le moteur électrique de l'éolienne (10) fait pivoter le support de l'éolienne (6) ainsi que les engrenages (24) et les plaques à vent (32) dessus dans la direction du vent.

4. Eolienne selon la revendication 1, **caractérisée en ce que** sont prévues des barres verticales (58) ; une barre horizontale (61) se déplaçant selon l'arbre (22) sur son plan horizontal ; et **en ce qu'**une barre de générateur (63) qui se tient entre ladite barre horizontale (61) et le générateur (64) au travers de l'axe vertical de l'éolienne pour transmettre la puissance obtenue par la rotation de l'arbre principal (22) qui est mobile dans deux directions sur son plan horizontal, est transmise à un générateur (64) par l'arbre de transfert axial.

5. Eolienne selon la revendication 4, **caractérisée en ce que** le générateur (64) est fixé sur un espace de générateur (2).

6. Eolienne selon la revendication 4, **caractérisée en ce qu'**il est prévu des engrenages (70, 71), des paliers axiaux (72, 73), un train d'engrenages (74), un tube de maintien d'engrenage porteur (75), un palier radial (66) et un carter de palier radial (76) pour réduire la friction et la perte de puissance entre les engrenages (68, 69) en appliquant une puissance de rotation égale et bidirectionnelle aux engrenages menés (69) du groupe d'engrenages (56, 57, 59, 60, 62) qui transmet la puissance entre les barres (22, 58, 61, 63) formant un angle de 90° les unes par rapport aux autres.
